# EUROPEAN PATENT APPLICATION

(11) **EP 4 647 467 A1**
(43) Date of publication of application: **12.11.2025**
(21) Application number: 24174814.4
(22) Date of filing: 08.05.2024
(51) Int. Cl.: C09B 61/00, A23L 19/00, C09B 67/22

(54) **NATURAL BLACK COLORING COMPOSITIONS**

(71) Applicant: Oterra A/S, 2970 Hørsholm (DK)
(72) Inventor: Steer, Dylan, 2970 Hoersholm (DK); Schjoerring-Thyssen, Jakob, 2970 Hoersholm (DK)
(74) Representative: Willnegger, Eva

(57) **Abstract**

A natural black coloring composition comprising a pigment derived from Genipa americana, preferably genipin-glycine; and one or more co-pigments

## Description

### FIELD OF THE INVENTION

The invention relates to the field of natural black coloring compositions for food, feed, or drink applications. Consumers are more and more interested in entirely natural coloring compositions for food applications. Therefore, there is a need for pH-stable and heat-resistant natural black coloring compositions for these food applications.

### PRIOR ART

U.S. RE46,695 to ADM Wild Flavors discloses a method of preparing stable, natural colors from *Genipa americana* fruit juice by mixing it with a second juice, such as watermelon juice. But compositions obtained with this process can still be improved in respect to their coloring performance and physical and chemical stability.

US2021292567A1 to ADM Wild Flavors discloses a process for making huito-based colorant by mixing *Genipa americana* fruit juice isoleucine, lysine, and alanine. But compositions obtained with this process can still be improved in respect to their coloring performance as well as their physical and chemical stability.

WO2023148090A2 to Givaudan discloses a stable black and brown composition obtained from the reaction of oxidized genipa juice and an earth metal hydroxide such as calcium hydroxide for the brown and with amino acids derived from white bean protein or oat protein for the black. But these compositions can still be improved in respect to their coloring performance and physical and chemical stability.

EP2346948 to Ecoflora discloses a blue colorant derived from *Genipa americana.* But this document does not disclose black coloring compositions.

EP2872567 to Ecoflora discloses colorant compounds derived from *Genipa americana* and glycine. But this document does not disclose black coloring compositions.

EP2999750 to Ecoflora discloses colorant compounds from *Genipa americana.* But this document does also not disclose black coloring compositions.

Vegetable carbo provides a black but is not regulatory approved by many regulatory bodies for use in pet food, food, and beverages.

Spirulina can be used as a starting material for obtaining black natural coloring compositions. But Spirulina has cost disadvantages as well as disadvantages in terms of heat and pH stability.

Consequently, there is still a need to provide less costly natural black coloring compositions with improved coloring performance, physical, chemical, and microbiological stability that are both heat and pH stable.

### SHORT DESCRIPTION OF THE INVENTION

The inventors surprisingly found that the use of binary and ternary mixtures of a huito-based composition, preferably genipin-glycine, produces a black with both low lightness and low chroma, also referred to as L and C in the LCH model.

Accordingly, a first aspect of the present invention is a natural black coloring composition comprising:
▪ A pigment derived from Genipa americana, preferably genipin-glycine; and
▪ One or more co-pigments;

wherein the natural black coloring composition is a binary composition comprising an extract derived from Genipa americana, preferably genipin-glycine and a co-pigment, preferably beta-carotene, annatto, or paprika; or
wherein the natural black coloring composition is a ternary composition comprising an extract derived from Genipa americana, preferably genipin-glycine and two co-pigments,

▪ A first co-pigment, wherein the first co-pigment is a carotenoid, preferably beta-carotene, an annatto extract, or a turmeric extract and preferably is a turmeric extract; and
▪ A second co-pigment, wherein the second co-pigment is a red beet extract, an anthocyanin source, preferably an extract from grape, violet carrot, and red sweet potato, or carmine.

In another aspect, the natural black coloring composition is a binary natural black coloring composition and wherein the natural black coloring composition comprises no further co-pigment.

In another aspect, the natural black composition is a binary composition comprising
▪ From 80 w% to 90 w%, preferably 84 w% to 86 w% of a pigment derived from Genipa americana, preferably genipin-glycine, in preferred embodiment, the colour strength of the pigment derived from Genipa americana, preferably the genipin-glycine, as measured using standard spectroscopic techniques (E10% 592 nm in demineralized water, coefficient 10.0) is from 360 CU/kg to 500 CU/kg, even more preferably from 380 CU/kg to 420 CU/kg.; and
▪ From 10 w% to 20 w%, preferably 14 w% to 16 w% of paprika oleoresin as co-pigment, preferably emulsified paprika oleoresin, preferably, the colour strength of paprika oleoresin using standard spectroscopic techniques (absorbance at 462 nm in acetone, coefficient 0.1515) is preferably 98000 CU/kg to 204000 CU/kg or preferably 120000 CU/kg to 180000 CU/kg;
wherein the w% are as compared to the total weight of the pigments in the natural black coloring composition.

In another aspect, the composition is a binary composition comprising
▪ From 97.5 w% to 98.7 w%, preferably from 97.8 w% to 98.4 w% of a pigment derived from Genipa americana, preferably genipin-glycine; and
▪ From 1.3 w% to 2.5 w%, preferably 1.6 w% to 2.2 w% of beta-carotene as co-pigment, preferably spray-dried beta-carotene, orange carrot juice or beta-carotene extract;
wherein the w% are as compared to the total weight of the pigments in the natural black coloring composition.

In another aspect, the natural black coloring composition is a binary composition comprising 94 w% to 99 w%, preferably 96 w% to 98 w%, or most preferably 96.5 w% to 97.5 w% of genipin-glycine with respect to the carotenoids in the natural black coloring composition, preferably wherein the natural black coloring composition is used in opaque applications.

In another aspect, the natural black coloring composition is a binary composition comprising 98 w% to 99.7 w%, or preferably 98.7 w% to 99.5 w% of genipin-glycine with respect to carotenoids in the natural black coloring composition.

In another aspect, the composition is a binary composition comprising
▪ From 45 w% to 70 w%, preferably from 55 w% to 65 w% of a pigment derived from Genipa americana, preferably genipin-glycine; and
▪ From 30 w% to 55 w%, preferably from 35 w% to 45 w% norbixin as co-pigment;
wherein the w% are as compared to the total weight of the pigments in the natural black coloring composition.

In another aspect, the natural black coloring composition is a ternary natural black coloring composition, and wherein the natural black coloring composition comprises no further co-pigment.

In another aspect, the natural black coloring composition is a ternary composition comprising grom 89.9 w% to 96.7 w%, preferably from 91.1 w% to 95.5 w% of a pigment derived from Genipa americana, preferably genipin-glycine; and
▪ A first co-pigment, wherein the first co-pigment is from 3.0 w% to 9.0 w%, preferably 4.0 w% to 8.0 w% curcumin; and
▪ A second co-pigment, wherein the second co-pigment is from 0.3 w% to 1.2 w%, preferably from 0.5 w% to 0.9 wt% betanin.
wherein the w% are as compared to the total weight of the pigments in the natural black coloring composition.

In another aspect, the natural black coloring composition is a ternary composition comprising
▪ From 18 w% to 58 w%, preferably from 18.4 w% to 38.4 w% of a pigment derived from Genipa americana, preferably genipin-glycine; and
▪ A first co-pigment, wherein the first co-pigment is from 0.4 w% to 5.2 w%, preferably 0.8 w% to 3.2 w% curcumin; and
▪ A second co-pigment, wherein the second co-pigment is from 40 w% to 80 w%, preferably from 60 w% to 70 w% dried grape juice, wherein the colour strength of the anthocyanin in dried grape juice is preferably 35 CU/kg to 40 CU/kg as measured using standard spectroscopic techniques (E1 % at peak maximum in pH 3.0 0.1M citrate buffer, coefficient 100);
wherein the w% are as compared to the total weight of the pigments in the natural black coloring composition.

In another aspect, the natural black coloring composition is in the form of a dry powder or of a liquid, and preferably is in the form of a dry powder.

Another aspect of the present invention is the use of the natural blue coloring composition for coloring an edible product. Preferably the natural blue coloring composition is dosed at 0.05 w% to 3 w%, preferably from 0.1 w% to 2 w%, even more preferably from 0.15 w% to 1.5 w% as compared to the total weight of the edible product, and wherein the edible product preferably is a pet food, feed, food, drink, nutraceutical or pharmaceutical.

Another aspect is the use of the natural black coloring composition to color a food, feed, or drink product, in particular a jelly gums, hard candy, cereal, petfood, icing, and ice-creams or dietary complements, or pharmaceutical products. Preferably, the food, feed or drink product comprises the natural black coloring composition in an amount from 0.01 w% to 5 w%, preferably 0.05 w% to 2 w%, and even more preferably from 0.1 w% to 1 w% as compared to the total weight of food, pet food, feed, or drink product.

Another aspect of the present invention is a method for coloring a food, feed, or drink product, in particular jelly gums, hard candy, cereal, petfood, icing, and ice-creams, or dietary complements, or pharmaceutical products, comprising mixing the natural black coloring composition with the food, feed or drink product, in particular jelly gums, hard candy, cereal, petfood, icing, and ice-creams. Preferably, the food, feed or drink product comprises the natural black coloring composition in an amount from 0.01 w% to 5 w%, preferably 0.05 w% to 2 w%, and even more preferably from 0.1 w% to 1 w% as compared to the total weight of food, pet food, feed, or drink product.

Another aspect of the invention is a food, pet food, feed, or drink product, in particular a jelly gums, hard candy, cereal, petfood, icing, and ice-creams, or dietary complements, or pharmaceutical products, comprising the natural black coloring composition. Preferably, the food, pet food, feed or drink product comprises the natural black coloring composition in an amount from 0.01 w% to 5 w%, preferably 0.05 w% to 2 w%, and even more preferably from 0.1 w% to 1 w% as compared to the total weight of food, feed, or drink product.

### SHORT DESCRIPTION OF THE DRAWINGS

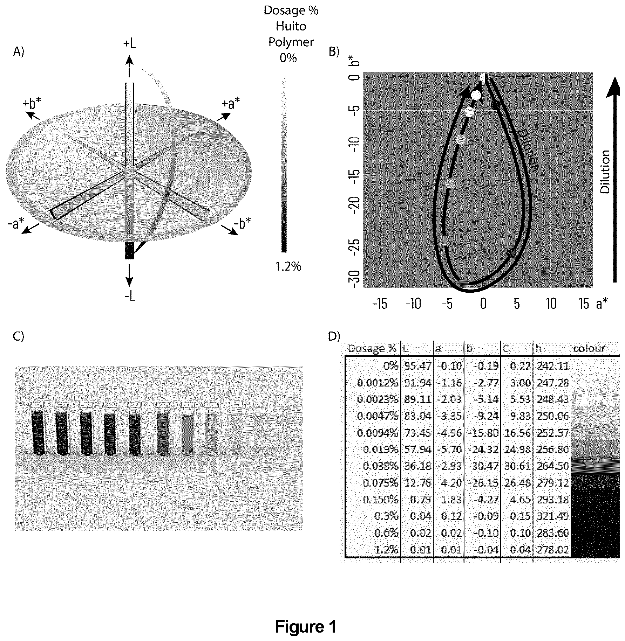

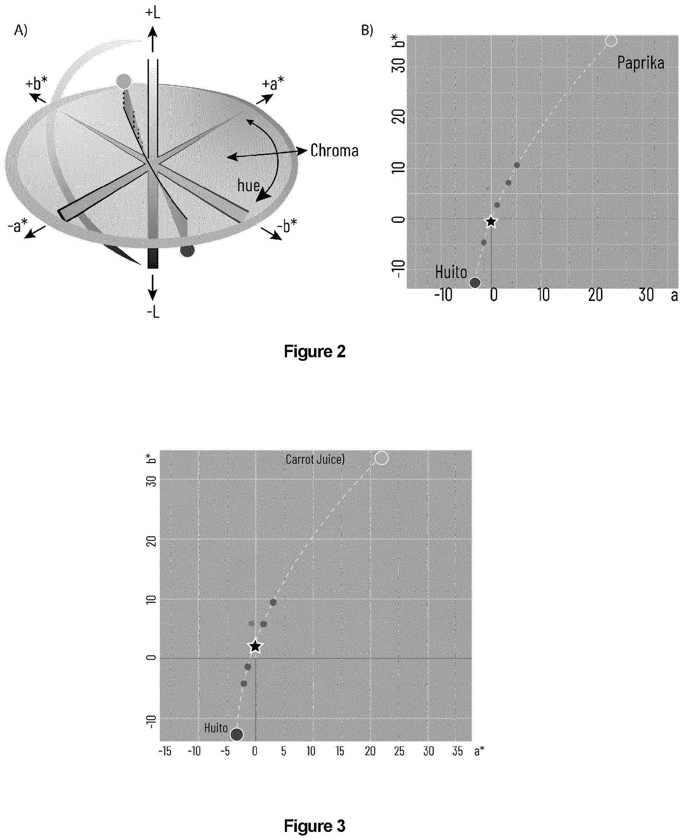

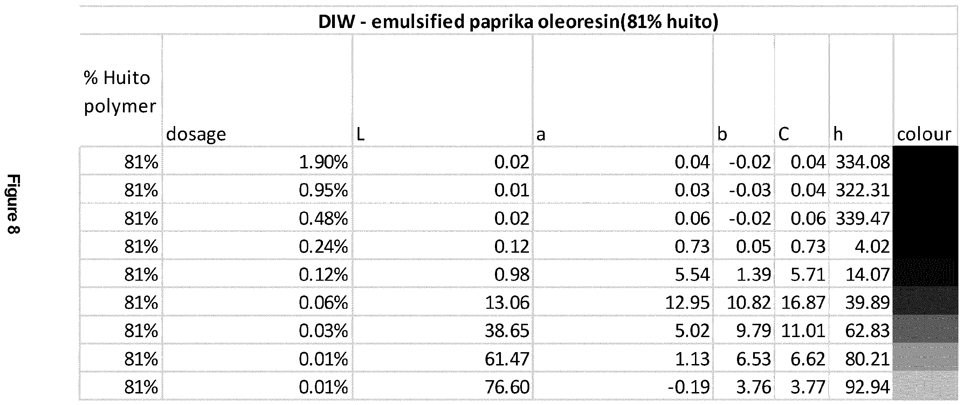

**Figure 1****:**
   A) shows a 3D color space showing dilution of Huito polymer from 1.2% (appears very dark) to 0% (appears white or transparent) in deionized water.
   B) Projection of measured huito onto a*-b* plane (left) and L axis (right).
   C) Photo of each color from 1.2% to 0.0012% huito left to right in 1 cm cuvettes.
   D) Data recorded for each sample on Datacolor 850.
   The difference between ternary and binary blends are demonstrated below as colorimetric readings of huito + turmeric + red beet (blue + yellow + red), or huito + carrot juice (blue + orange), or huito + paprika (blue + orange). The binary plots below (Figure 2 and Figure 3) present data collected for mixtures of icing sugar colored with huito (0.01% dosage) plus either carrot juice (4% dosage) or paprika oleoresin (0.02% dosage).
   Dosages were selected to target L~50 where there is approximately maximum chroma. The measured a*b* value of unmixed icings was plotted with colored circles, while the measured a*b* value of mixtures of icings are plotted as dark grey circles. These a*b* measurements form a curved line. Some point along this line has the minimal chroma and suggests the optimal composition for a black shade. This point is represented in the data plots as a black star. The measured color was a neutral grey as opposed to a black. Increasing the dosage at this composition trends towards black as L decreases. This tendency is visible for both high-chroma samples in figure 1a and low-chroma samples e.g. figures 8, 9, or 16.
**Figure 2****:**
   A) color space showing relationship between L, a*, and b* axes and the colors in 3D space.
   B) An example tieline from a bright orange color (e.g. paprika oleoresin) to a dark blue (e.g. huito).
**Figure 3****:** Color tieline of an extract from Genipin americana, preferably genipin-glycine with the co-pigment carrot juice concentrate.

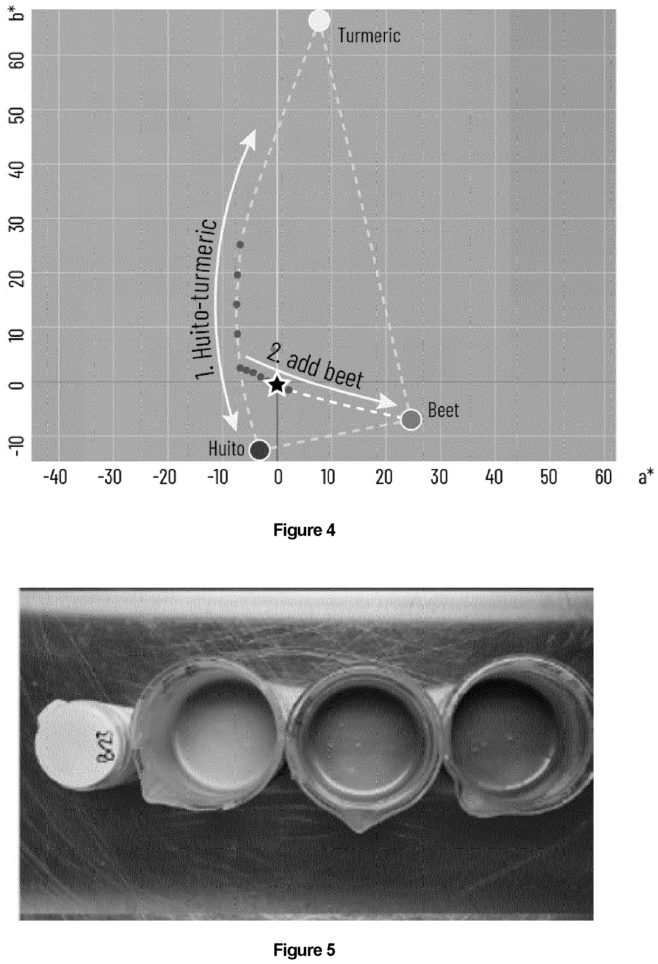

**Figure 4****:** Ternary natural black coloring composition. In the ternary plot the measured a*b* values of icing sugar mixtures colored with constant dosages (0.08% dosage) of turmeric (0.013% curcumin), huito (0.05% polymer), and beet (0.0006% betanin) are plotted as yellow, blue, and red circles respectively. Dashed lines give the predicted color of mixtures of each pair of colors. The plot demonstrates the process of finding the correct composition for a black. First the huito and turmeric line (blue and yellow to make green) is measured, though alternatively huito and beet (blue and red to make purple) or beet and turmeric (red and yellow to make orange) can be done as well. From this binary an optimized binary mixture is identified such that addition of the third component is expected to produce black. A second mixture line is prepared using this mixture and the third component. In this example beet is used. This will have a point with minima chroma that approximates a black shade. This process can be repeated as needed to reduce the measured chroma.
**Figure 5****:** Binary natural black coloring compositions comprising ca. 70% genipin-glycine and 30% paprika oleoresin as co-pigment in icing sugar at ca. 0.007%, 0.012%, and 0.017% are presented.

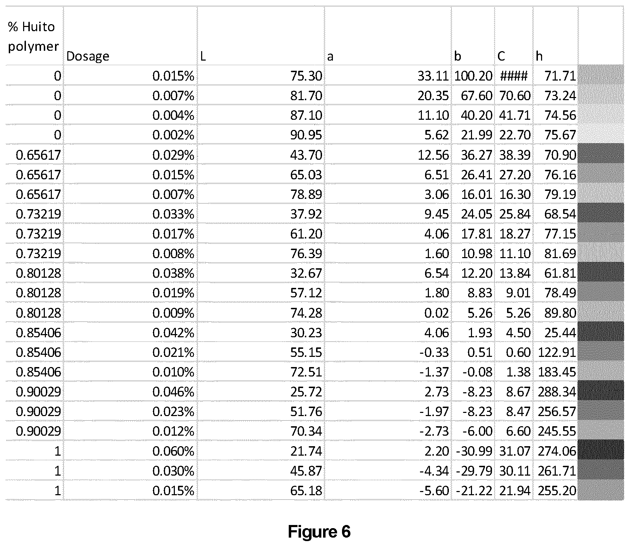

**Figure 6****:** Binary natural black coloring compositions comprising huito polymer, preferably genipin-glycine, and emulsified paprika as co-pigment in deionized water.

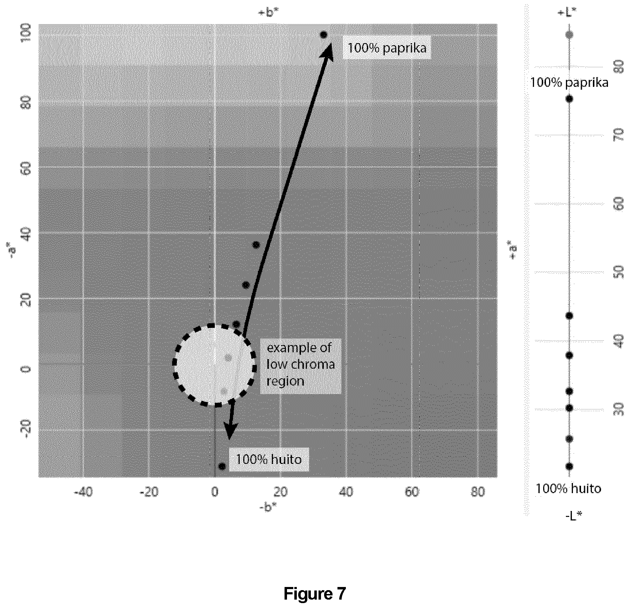

**Figure 7****:** Binary natural black coloring compositions comprising huito polymer, preferably genipin-glycine, and emulsified paprika as co-pigment in deionized water.
**Figure 8****:** Binary natural black coloring compositions. A dilution series was produced with 81% and 86% huito polymer, both present in the identified low chroma region above. We found generally 80 w% to 90 w% huito (10 w% to 20 w% paprika oleoresin) and preferably 84 w% to 86% huito polymer (14 w% to 16 w% paprika oleoresin) is best for preparing a black food coloring pigment from a blend of huito and emulsified paprika, wherein the w% refer to the total weight of the natural black coloring composition. In each case greater than 0.1 w% dosage (i.e. 100 mg/100 mL) or preferably greater than 0.2 w% produces a dark black appearance. Compositions outside these regions will have a notable blueish or reddish hue and not appear qualitatively as black. Lower concentrations produce a low chroma, but pale black (i.e. gray). This demonstrates that identifying a low chroma region at intermediate dosage allows prediction of optimal composition at high dosage for a dark black shade.

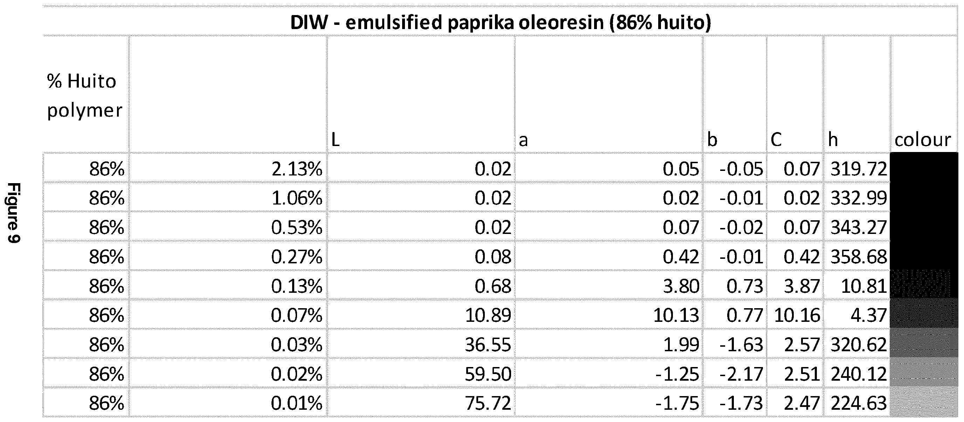

**Figure 9****:** Binary natural black coloring composition of genipin-glycine and paprika oleoresin as co-pigment.

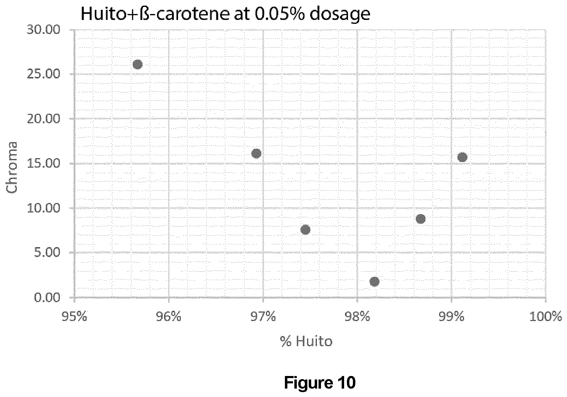

**Figure 10****:** Binary natural black coloring composition of genipin-glycine and spray-dried beta carotene as co-pigment. Blends were prepared in mass ratios of each component in icing sugar. While a different specific chroma vs concentration plot was observed at each dosage, below plots the curve at 0.05 w% dosage. A black is observed between 97.5 w% to 98.7 w% of genipin-glycine and 1.3 w% to 2.5 w% β-carotene or preferably 97.8 w% to 98.4% and 1.6 w% to 2.2 w% β-carotene. Similar results are observed in other sources of β-carotene including orange carrot juice or β-carotene extract with dosages optimized for each product tested.

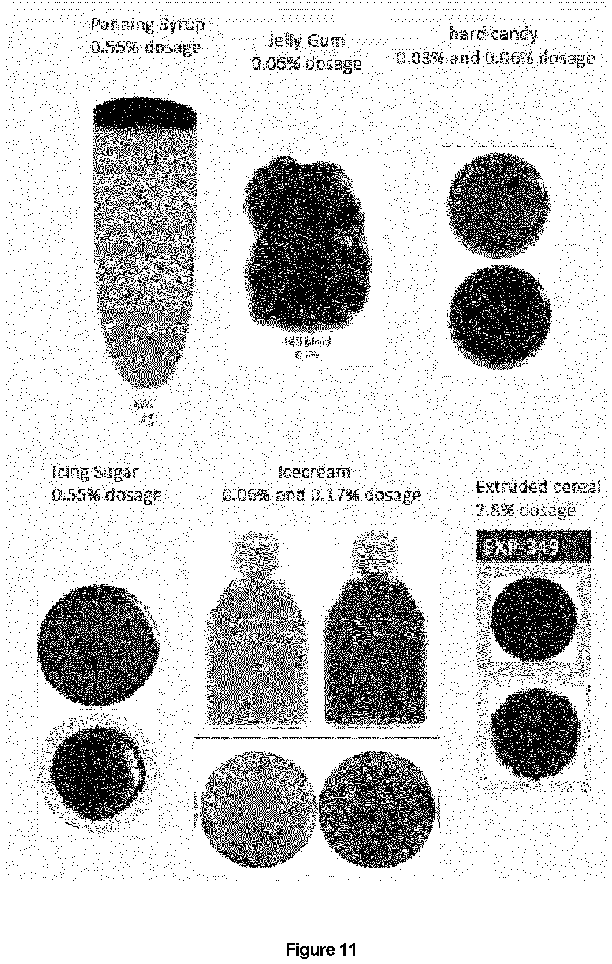

**Figure 11****:** Binary natural black coloring composition of genipin-glycine and spray-dried beta carotene as co-pigment in an amount of 98.2 w% genipin-glycine and 1.8 w% β-carotene was tested in a variety of applications to demonstrate broad applicability including jelly gum, hard candy, panning syrup, icing sugar, extruded cereal, and dairy ice-cream. All applications produce a range of grey and black food products. This demonstrates that colorimetric readings via Datacolor can be used to predict pigment applicability as a food colorant in application. In transparent applications this can have a green or yellow hue cast so is only applicable in opaque applications.

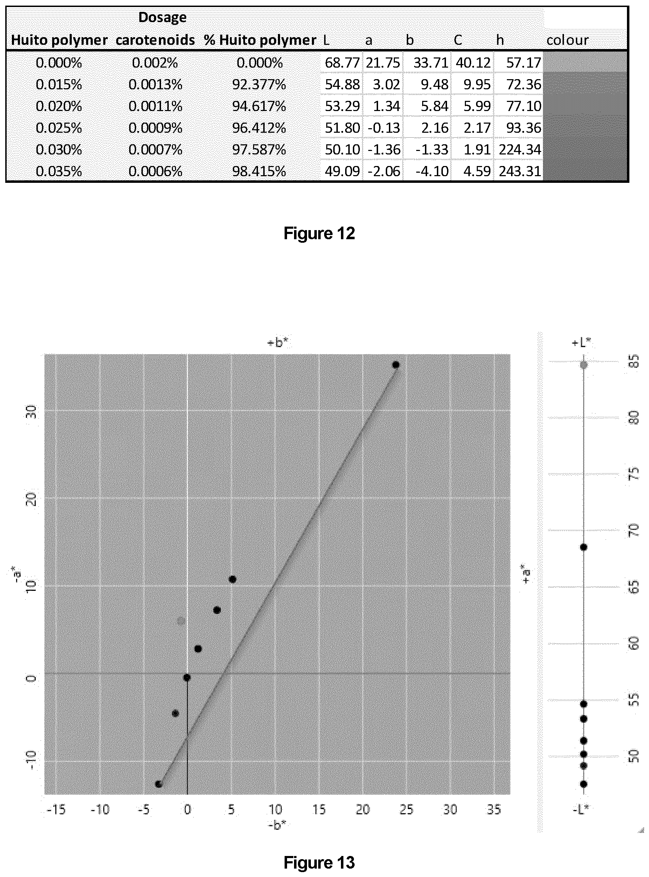

**Figure 12****:** Binary natural black coloring composition of genipin-glycine and carrot juice concentrate as co-pigment. Data was reported relative to measured w% of carotenoids in the orange carrot juice concentrate. Low chroma black was observed with 94 w% to 99 w%, preferably 96 w% to 98 w%, or most preferably 96.5 w% to 97.5 w% of genipin-glycine with respect to the carotenoids in the natural black coloring composition.
**Figure 13****:** Binary natural black coloring composition of genipin-glycine and carrot juice concentrate as co-pigment.

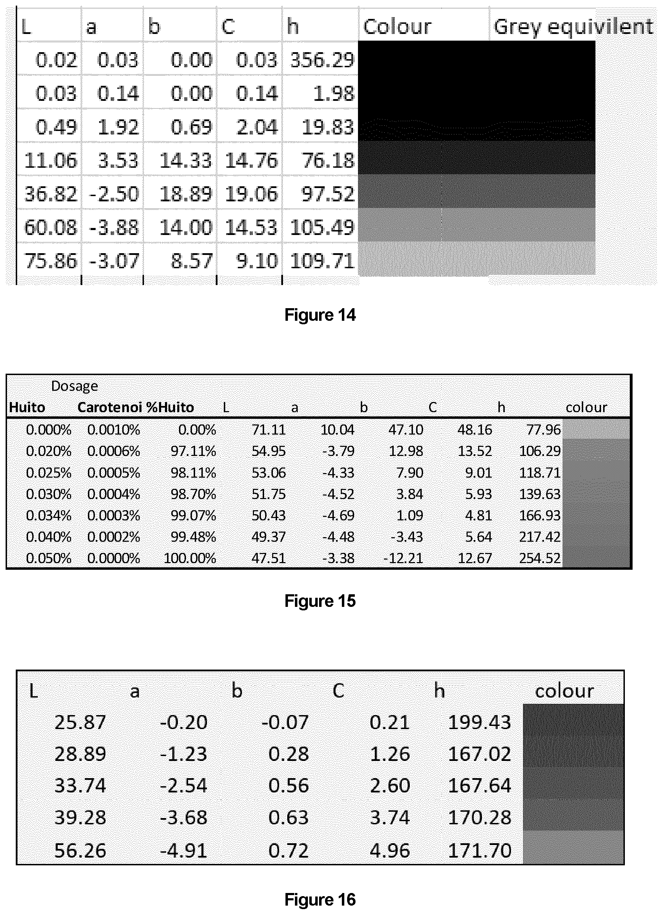

**Figure 14****:** Binary natural black coloring composition of genipin-glycine and carrot juice concentrate as co-pigment in icing. A sample of ca. 96.5 w% genipin-glycine was prepared and dispersed in deionized water. Very concentrated Datacolor measurements presented below report black. Intermediate dosages appeared significantly green. The genipin-glycine and carrot juice concentrate as co-pigment in icing at high dosages produced a black with notable green cast, preventing widespread usage in transparent applications. Genipin-glycine and carrot juice concentrate as co-pigment in icing were effective as a black composition in many opaque applications.
**Figure 15****:** Binary natural black coloring composition of genipin-glycine and carrot juice concentrate as co-pigment. Huito is blended with carrot juice concentrate. Different carrot sources or additives to carrot juice can shift the juice color. Here a yellow shade of carrot juice concentrate is used. Again, a range of compositions identifies a low chroma region between 98 w% to 99.7 w%, or preferably 98.7 w% to 99.5 w% of genipin-glycine with respect to carotenoids in the natural black coloring composition.
**Figure 16****:** Binary natural black coloring composition of genipin-glycine and carrot juice concentrate as co-pigment. Huito is blended with carrot juice concentrate. When icing sugar with a large dosage is diluted the chroma remains low across the range from perceived black to moderate grey. The sample appears black/gray across the entire measured range. At high dosage (top row in following table) the Datacolor fails to accurately measure the low luminosity of the black as perceived and is reported as a gray.

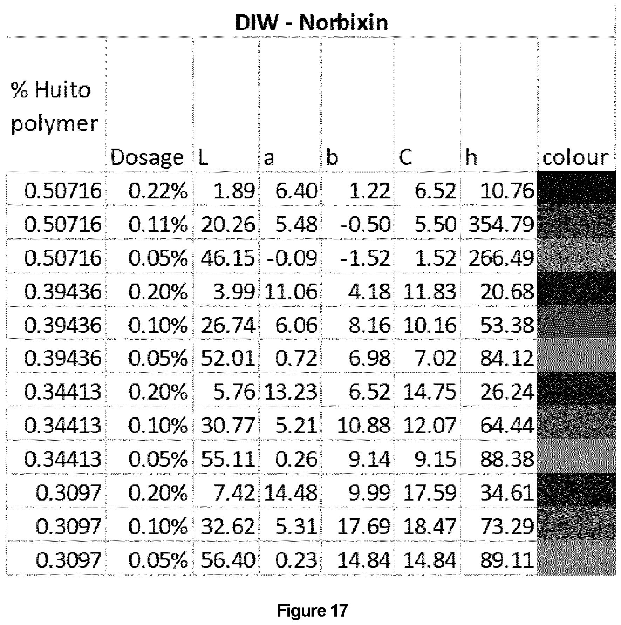

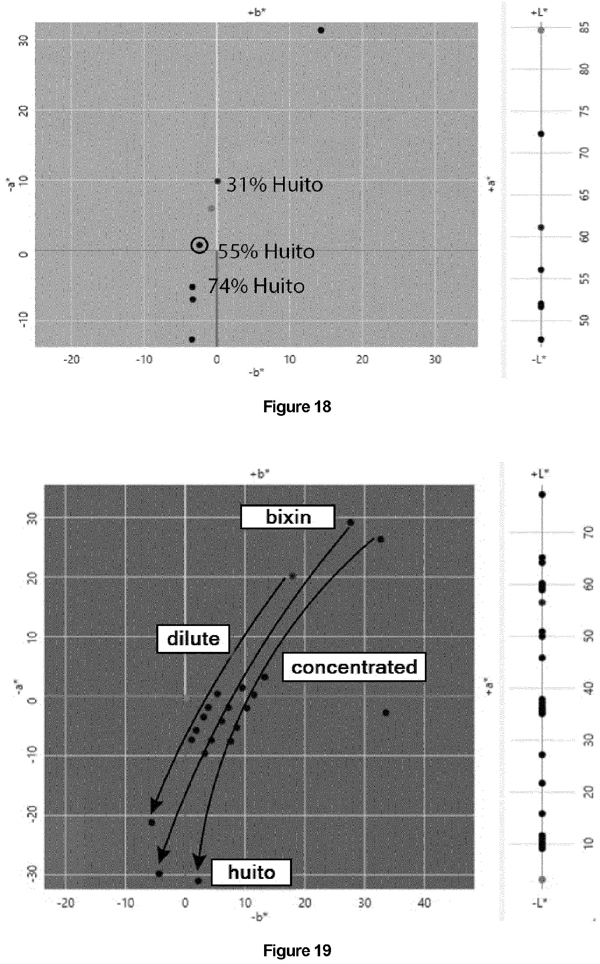

**Figures 17** **and** **18****:** Binary natural black coloring composition of genipin-glycine and annatto as co-pigment in deionized water. Huito was blended with spray dried annatto extract composed of norbixin crystals. A range of compositions presented a low chroma region. Norbixin was blended with huito approximately 45 w% to 70 w% of genipin-glycine and 30 w% to 55 w% norbixin or preferably 55 w% to 65 w% of genipin-glycine and 35 w% to 45 w% norbixin. This is demonstrated in the a* vs b* plot collected with 0.05% dosage samples.
**Figure 19****:** Binary natural black coloring composition of genipin-glycine and annatto as co-pigment in deionized water. Huito was blended with spray dried annatto extract composed of bixin crystals. A plot of all ratios tested from 100 w% bixin to 100 w% huito at 3 different dosages ranging from ca. 2 w% to 0.5 w% demonstrated that bixin crystals mixed with huito do not produce a neutral black shade because of a relatively large chroma at even slightly concentrated dosages. Black lines guide the eye with varying bixin to huito ratios. This produces a noticeable colored hue to all samples tested. With increasing dosage or concentration, the line of points shifts further away from the zero chroma point (a*=b*=0) and therefore is not directly applicable as a black shade.

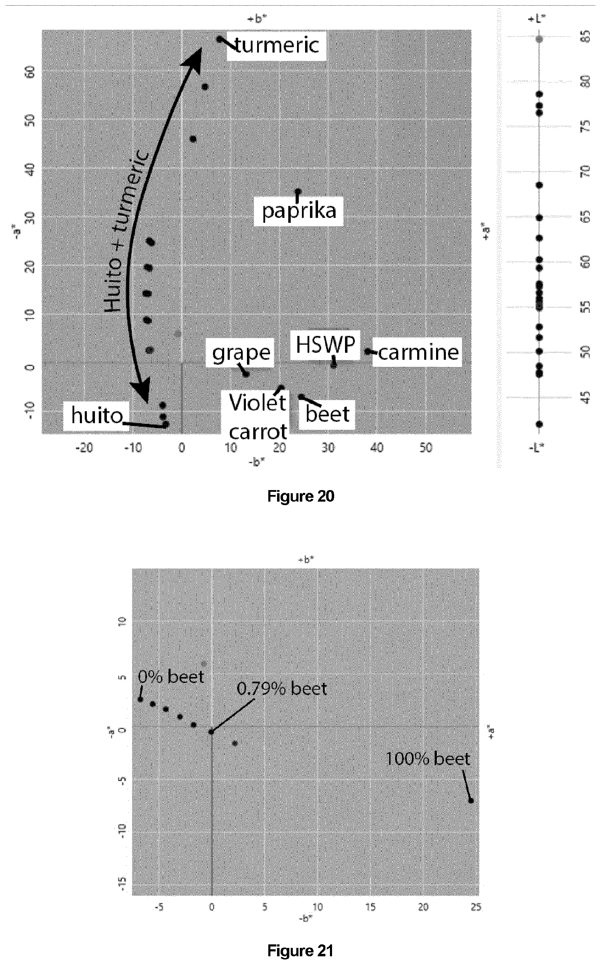

**Figure 20****:** Ternary natural black coloring compositions comprising genipin-glycine and the co-pigment curcumin prepared in icing sugar produces a range of greens. By drawing a line from the red co-pigment through the low chroma region to intersect with the turmeric-huito line a ternary composition were approximated. Examples of red co-pigments betanins (red beet), anthocyanins (grape, violet carrot, and Hanson sweet potato (HSWP), and carmine.

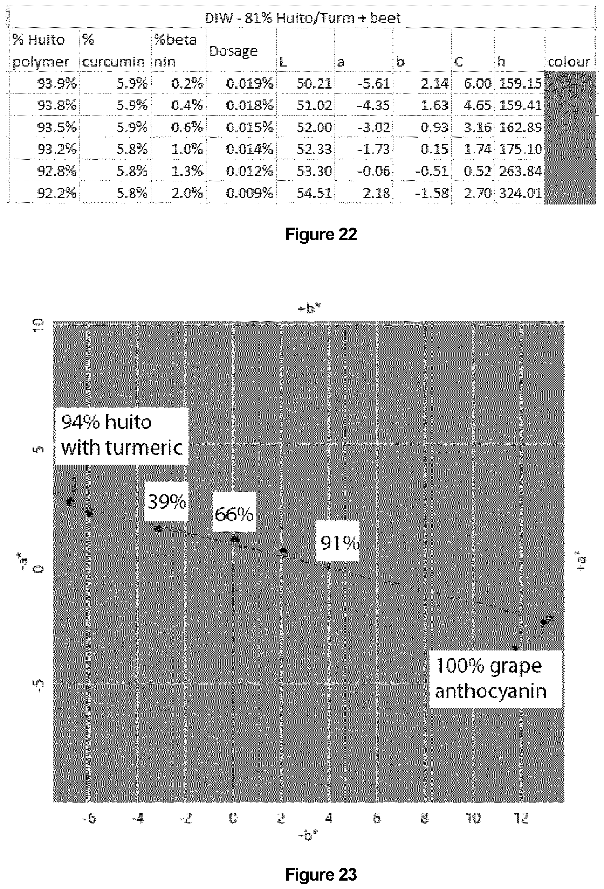

**Figures 21** **and** **22****:** Ternary natural black coloring composition with huito and the co-pigments turmeric and red beet. 94.1 w% huito with 5.9 w% curcumin was mixed with spray dried beet powder in various concentrations. Results were reported with respect to reported betanin content in beet powder. Results are in icing sugar at 0.012 w% dosage. A grey scale was achieved with 91 w% to 97 w% huito and 3 w%-9 w% curcumin or preferably 92 w% to 96 w% huito and 4 w% to 8 w% curcumin when blended with 0.3 w% to 1.2 w% or preferably from 0.5 w% to 0.9 w% betanin overall. This amounts to a final composition range of 89.9 w% to 96.7 w% huito polymer plus 3.0 w% to 9.0 w% curcumin plus 0.3 w% to 1.2 w% betanin or preferably 91.1 w% to 95.5 w% huito polymer plus 4.0 w% to 8.0 w% curcumin plus 0.5 w% to 0.9 wt% betanin.

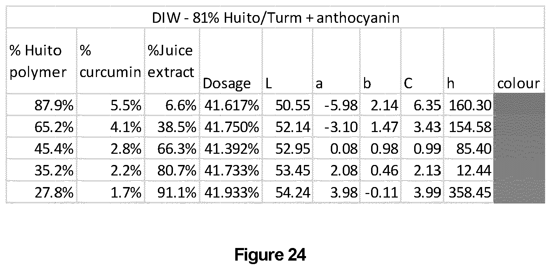

**Figure 23** **and** **Figure 24****:** Ternary natural black coloring composition with genipin-glycine and the co-pigments turmeric and anthocyanin. 94.1 w% huito with 95.9 w% curcumin blend was mixed with spray dried anthocyanin powder and mixed. Powders were dispersed in deionized water. The observed color of an anthocyanin solution depends strongly on the solution pH and the anthocyanin extraction source. Other pH solutions and anthocyanin sources are equally applicable but will change the quantitative ratio of anthocyanin to huito in the final blend. The mass of the filtered, dried grapefruit juice extract was used for anthocyanin fractions. With deionized water, between ca. 40 w% to 80 w%, or preferably from 60 w% to 70 w% grape anthocyanin dried juice content produces a satisfactory low chroma pigment. This amounts to a final composition range of 18 w% to 58 w% huito polymer plus 0.4 w% to 5.2 w% curcumin plus 40 w% to 80 w% dried grape juice content or preferably 18.4 w% to 38.4 w% huito polymer plus 0.8 w% to 3.2 w% curcumin plus 60 w% to 70 w% dried juice content.

### DETAILED DESCRIPTION OF THE INVENTION

The invention is now described in further detail without, however, limiting its scope.

### Natural

Natural means that the pigments and the co-pigments of the coloring composition of the invention are sourced from plants, algae, microorganisms, insects, or animals. The pigments of the natural coloring composition of the invention are preferably sourced from plants, in particular extracts or juices from the Jagua plant (*Genipa americana*)*,* also called huito.

Other ingredients may be of synthetic origin, such as for example antioxidants or antifoaming agents.

The pigments of the present invention may have been reacted with color-increasing agents, such as amino acids, preferably glycine, hereinafter referred to as "genipin-glycine," such as for example described in European patent EP 2 346 948 B1.

### Black

Black means a coloring shade of a low chroma and preferably a low lightness in the CIELAB color system. Usually, the chroma is close to 0. In a preferred embodiment the chroma of the natural black coloring composition is from 0 to 15, preferably from 0 to 10, even more preferably from 0 to 5 in the La*b* system.

In one embodiment, the hue value of the natural black coloring composition is from 0 to 360 in the La*b* system.

In a preferred embodiment, the hue value is from 160 to 190 in the La*b* system.

In a preferred embodiment, the Lightness L is 50 in the La*b* system.

A pigment usually is dissolved or dispersed in a medium at some weight% concentration or dosage. For transparent application here, the pigment is dissolved in water. For opaque applications here, the pigment is dissolved in water-based icing.

In a preferred embodiment, color is measured in transmission (light passing through a substance) or reflection (light bouncing off a substance). Color can be measured and quantified in a 3-dimensional space using La*b* coordinates with L axis (lightness, brightness of color with L=0 pure black to L=100 pure white), a* axis (negative values green to positive values red), and b* axis (negative values blue to positive values yellow).

Alternatively, the color space can be expressed as LCh with Lightness (L, as before), Chroma (color intensity or saturation, C=(a*2+b*2)1/2 ), and hue angle (h, angle in color space from the +a* axis). When color is measured, e.g. using a Datacolor 850, it is plotted as a point in this 3-D La*b* or LCh space.

### Natural black coloring composition

The natural black coloring composition comprise the following:
▪ A pigment derived from Genipa americana, preferably genipin-glycine; and
▪ One or more co-pigments.

The natural black coloring composition preferably is a binary composition, or a ternary composition as described below wherein the natural black coloring composition is a ternary composition comprising an extract derived from Genipa americana, preferably genipin-glycine and two co-pigments,
▪ A first co-pigment, wherein the first co-pigment is a carotenoid, preferably beta-carotene, an annatto extract, or a turmeric extract and preferably is a turmeric extract; and
▪ A second co-pigment, wherein the second co-pigment is a red beet extract, an anthocyanin source, preferably an extract from grape, violet carrot, and red sweet potato, or carmine.

The natural black coloring composition of the present invention is shortly referred to as the "composition." If not defined otherwise, a reference to a "composition" refers to the natural black coloring composition of the invention.

### Binary natural black coloring compositions

Binary natural black coloring compositions comprise the huito-derived pigment, preferably genipin-glycine and one co-pigment. Preferably, no further co-pigment is comprised.

"Huito-derived pigment" and "co-pigment" are collectively referred to as "pigments". The weight percentages (w%) of the "Huito-derived pigment" and the "co-pigment" are as compared to the total weight of the pigments in the natural black coloring composition. In the case of a binary natural black coloring composition, the w% of the Huito-derived pigment and the co-pigment refer to the total weight of the Huito-derived pigment and the co-pigment in the natural black coloring composition.

Preferred binary natural black coloring compositions are:
▪ Huito-derived pigment, preferably genipin-glycine and co-pigment beta-carotene, preferably carrot juice; and
▪ Huito-derived pigment, preferably genipin-glycine and paprika, preferably paprika oleoresin.

In a preferred embodiment, the natural black coloring composition is a binary composition comprising,
▪ From 80 w% to 90 w%, preferably 84 w% to 86 w% of a pigment derived from Genipa americana, preferably genipin-glycine; and
▪ From 10 w% to 20 w%, preferably 14 w% to 16 w% of paprika oleoresin as co-pigment, preferably emulsified paprika oleoresin,
wherein the w% are as compared to the total weight of the pigments in the natural black coloring composition. The coloring strength of the paprika oleoresin as measured using standard spectroscopic methods (absorbance at 462 nm following FAO/WHO method for paprika oleoresin colour) is 110000 CU/kg to 150000 CU/kg or preferably 120000 CU/kg to 140000 CU/kg

In a preferred embodiment, the natural black coloring composition is a binary composition comprising:
▪ 70 w% to 85 w% huito-derived pigment, preferably genipin-glycine, even more preferably 75 w% to 80 w% huito-derived pigment, preferably genipin-glycine; and
▪ As a co-pigment: 15 w% to 30 w% paprika oleoresin, 20 w% to 25 w% paprika oleoresin, wherein the coloring strength of the paprika oleoresin as measured using standard spectroscopic methods (absorbance at 462 nm following FAO/WHO method for paprika oleoresin colour) is from 107800 CU/kg to 115000 CU/kg
wherein the w% are as compared to the total weight of the pigments in the natural black coloring composition.

In a preferred embodiment, the composition is a binary composition comprising
▪ From 97.5 w% to 98.7 w%, preferably from 97.8 w% to 98.4 w% of a pigment derived from Genipa americana, preferably genipin-glycine; and
▪ From 1.3 w% to 2.5 w%, preferably 1.6 w% to 2.2 w% of beta-carotene as co-pigment, preferably spray-dried beta-carotene, orange carrot juice or beta-carotene extract;
wherein the w% are as compared to the total weight of the pigments in the natural black coloring composition. Beta carotene content added is evaluated before blending by using standard spectroscopic techniques evaluated at 450 nm in acetone. Coefficient used is 2559.

In a preferred embodiment, the natural black coloring composition is a binary composition comprising 94 w% to 99 w%, preferably 96 w% to 98 w%, or most preferably 96.5 w% to 97.5 w% of genipin-glycine with respect to the carotenoids in the natural black coloring composition, preferably wherein the natural black coloring composition is used in opaque applications.

In a preferred embodiment, the natural black coloring composition is a binary composition comprising 98 w% to 99.7 w%, or preferably 98.7 w% to 99.5 w% of genipin-glycine with respect to carotenoids in the natural black coloring composition.

In a preferred embodiment, the natural black coloring composition is a binary composition comprising:
▪ From 45 w% to 70 w%, preferably from 55 w% to 65 w% of a pigment derived from Genipa americana, preferably genipin-glycine; and
▪ From 30 w% to 55 w%, preferably from 35 w% to 45 w% norbixin as co-pigment;
wherein the w% are as compared to the total weight of the pigments in the natural black coloring composition. The mass of norbixin, or of norbixin-bixin mixture, added is determined by standard spectroscopic techniques (from E1% at 452 nm in 0.5% KOH_{(aq)}. Coefficient used is 2870

In a further preferred embodiment, no further pigment or co-pigment is present in the binary natural black coloring composition.

### Ternary natural black coloring composition

Ternary natural black coloring compositions comprise a pigment derived from Genipa americana, preferably genipin-glycine and two co-pigments. Preferably, no further pigment or co-pigment is comprised in the ternary natural black coloring composition of the present invention.

In the case of a ternary natural black coloring composition, the w% of the Huito-derived pigment and the two co-pigments refer to the total weight of the Huito-derived pigment and the two co-pigments in the natural black coloring composition.

Preferred ternary natural black coloring compositions are:
▪ Huito-derived pigment, preferably genipin-glycine and two the following two co-pigments: turmeric and red beet;
▪ Huito-derived pigment, preferably genipin-glycine and the following two co-pigments: turmeric and anthocyanins, preferably derived of grape, violet carrot, or Hansen sweet potato;
▪ Huito-derived pigment, preferably genipin-glycine and the following two co-pigments: turmeric and carmine.

In a preferred embodiment, the natural black coloring composition is a ternary natural black coloring composition, and wherein the natural black coloring composition comprises no further pigment or co-pigment.

In preferred embodiment, the natural black composition is a ternary composition comprising
▪ From 89.9 w% to 96.7 w%, preferably from 91.1 w% to 95.5 w% of a pigment derived from Genipa americana, preferably genipin-glycine; and
▪ A first co-pigment, wherein the first co-pigment is from 3.0 w% to 9.0 w%, preferably 4.0 w% to 8.0 w% curcumin; and
▪ A second co-pigment, wherein the second co-pigment is from 0.3 w% to 1.2 w%, preferably from 0.5 w% to 0.9 wt% betanin.
Wherein the w% are as compared to the total weight of the pigments in the natural black coloring composition. Mass of curcumin added is preferably determined before blending using standard spectroscopic techniques (absorbance at 425 nm in ethanol (coefficient used is 1607), or 420 nm in acetone (coefficient used is 1650), or at 420 nm in chloroform (coefficient used is 1500). Mass of betanin is preferably determined before blending using standard spectroscopic techniques (%betanin measured at 535 nm in demineralized water with coefficient used 1120)

### Percentages

If not defined otherwise, the percentages of the present invention are generally weight-percentages (w%) as compared to the total weight of the natural black coloring composition.

In another embodiment, the percentages are as compared to the total weight of the pigment or co-pigment bearing extracts of the natural black coloring composition. The pigment-bearing extracts are also referred to as "pigments". The skilled person understands that the pigment-bearing extracts may comprise further components such as sugars.

### Genipa americana

*Genipa americana* is a Latin American variant of the *Gardenia jasminoides* family*.*

### Pigment: extracts from Genipa americana

The pigment of the present invention is any extract or juice from *Genipa americana* that comprises genipin or a genipin derivate.

In a preferred embodiment, the genipin has reacted with one or more sources of primary amines, such as amino acids, preferably glycine.

### Genipin-glycine

In a preferred embodiment, the pigment of the present invention is genipin-glycine.

Genipin-glycine is listed as a color additive exempt from certification and referred to "Jagua blue" or "Jungle blue" commercially available for example from the Applicant. Genipin-glycine is hereinafter also referred to as "huito polymer".

In a preferred embodiment, genipin-glycine is produced by reacting genipin (CAS Reg. No. 6902-77-8) in the juice of the unripe fruit of *Genipa americana* with an equivalent amount of the amino acid glycine (CAS Reg. No. 56-40-6) using mild heat. In a particularly preferred embodiment, the genipin-glycine is the genipin-glycine registered under the U.S.FDA number 21 CFR 73.225.

The principal coloring component in jagua (genipin-glycine) blue is a genipin-glycine polymer (CAS Reg. No. 1314879-21-4) consisting of repeating dimeric units containing two genipin moieties reacted to add glycine units as side chains. We will subsequently refer to this principal coloring component as "the polymer."

Iridoids, of which genipin is an example, are found in a wide variety of plants, and glycine is a common building block of proteins. The color additive jagua (genipin-glycine) blue also contains three dimers as minor coloring components (CAS Reg. No. 1313734-13-2, CAS Reg. No. 104359-67-3, and CAS Reg. No. 1313734-14-3) that are structural units of the polymer.

In a preferred embodiment, jagua (genipin-glycine) blue has a dark blue appearance. In a preferred embodiment, the color value (E10 percent) is 240-280 for the powder form and 120-240 for the liquid form.

In a preferred embodiment, the coloring strength of the pigment derived from Genipa americana, preferably of the genipin-glycine, is from 360 CU/kg to 500 CU/kg, even more preferably from 380 CU/kg to 420 CU/kg.

In a preferred embodiment, the colour strength of genipin-glycine is measured using standard spectroscopic techniques (E10% 592 nm in demineralized water with coefficient 10).

### Methods to obtain genipin-glycine

In a preferred embodiment, the genipin-glycine is obtainable or obtained by the following process:
▪ Peeling off a Genipa americana fruit from its skin, wherein said fruit without skin is *Genipa americana* fruit pulp;
▪ Optionally discarding the peel;
▪ Optionally extracting the pulp;
▪ Optionally squeezing the pulp through a mesh;
▪ Obtaining raw liquid juice from *Genipa americana* fruit pulp optionally by adding water; preferably by grinding the *Genipa americana* fruit pulp and compressing the ground Genipa americana fruit pulp against a mesh, wherein major solids are retained by said mesh and wherein raw liquid juice goes throughout said mesh,
▪ Mixing the raw liquid juice with between 0.2 grams and 1.6 grams of glycine per 100 millilitres of raw liquid juice;
▪ Optionally adding starch, preferably modified starch;
▪ Warming the raw liquid juice mixed with glycine to a temperature between 40 °C and 80 °C for a period from 1 hour to 10 hours; and
▪ Optionally drying, such as from example spray-drying, refractive window drying, tumble-drying, or freeze-drying.

### Coloring strength of genipin-glycine

In a preferred embodiment, the genipin-glycine is present in an amount of 20 to 40 weight percent (w%) for the powder form and 10 to 35 w% for the liquid form as compared of the total weight of the pigment.

In a preferred embodiment, pigment means the huito-extract reacted with genipin-glycine.

In a preferred embodiment, the genipin-glycine is approved under U.S. FDA docket number FDA-2020-C-2131.

### Co-pigment

Co-pigment is an extract or juice sourced from plants, algae, microorganisms, insects, or animals capable of providing a black coloring shade if mixed with a pigment derived from *Genipa americana,* preferably genipin-glycine.

Co-pigments are usually present in extracts from plants, algae, microorganisms, insects, or animals.

In the following the terms co-pigment and co-pigment containing extracts are used interchangeably, for example red beet is generally used in the field to describe a betanin containing extract of red beet. Usually, the extract or juice comprises sufficient pigment to obtain a black color shade in applications such as food, pet food, feed, or drink product.

### Overview of co-pigments

The Huito is mixed with one or more pigments ("Co-pigments").

An overview of co-pigments is given in Table 1:

| **Color** | | **Principle Co-pigment** | **Advantage** | **Disadvantage** |
|---|---|---|---|---|
| yellow | | Curcumin | versatile yellow | turbid |
| | | | | poor light stability |
| | | | | Temperature changes intensity |
| | | | | Ternary mixture required |
| yellow | orange | Beta Carotene | Can be ideal orange | Usually, turbid |
| | | | | slow dissolution |
| | | | | Poor stability in extrusion applications |
| yellow | orange | Annatto | transparent | Usually requires ternary |
| | | | | Lower storage stability |
| | | | | Ternary mixture required |
| Red | orange | paprika | Can be ideal orange | Usually, turbid |
| | | | | Poor stability in extrusion application |
| red | purple | anthocyanin | transparent | pH sensitive |
| | | | | Can precipitate huito polymer |
| | | | | too red/blue - needs ternary |
| red | purple | carmine | Great, vibrant color | not vegan |
| | | | easy to use | too blue/red - needs ternary |
| | | | transparent | |
| red | pink | Beet | ok red | Often high dosage is needed due to low pigment concentration |
| | | | | too blue/red - needs ternary |
| | | | pH stable | thermally unstable |

### Carotenoid

In a preferred embodiment, the co-pigment is a carotenoid. Carotenoids are used to describe tetraterpene pigments, which exhibit yellow, orange, red and purple colors preferably derived from plants or by fermentation.

### Beta-carotene

Preferably, the beta-carotene is obtained from natural sources for example by extraction of carrots (*Daucus carota*), and other edible plants with subsequent purification, or by a fermentation process of the fungus *Blackeslea trispora.*

Usually, the pigment content from *Blackeslea trispora* is no less than 96.0 wt% and the pigment content of carrot is between 65 mg/Kg and 83 mg/Kg.

In one embodiment, the beta-carotene is present in an amount from from 0.01 w% to 5 w%, preferably from 0.01 w% to 2.5 w%, even more preferably from 0.05 w% to 0.5 w% as compared to the total weight of the pigments in the natural black coloring composition.

The beta-carotene may be natural beta-carotene or nature-identical beta-carotene.

### Annatto

Annatto is used to describe an extract from the annatto plant comprising norbixin.

### Turmeric

Turmeric is used to describe an extract from the curcumin plant comprising curcumin.

### Paprika and paprika oleoresin

Paprika and paprika oleoresin are used to describe an extract from paprika comprising carotenoids.

In a preferred embodiment, the colour strength of paprika oleoresin using standard spectroscopic techniques (absorbance at 462 nm in acetone with coefficient 0.1515) is from 98000 CU/kg to 204000 CU/kg, and even more preferably from 120000 CU/kg to 180000 CU/kg.

### Red beet

A further preferred co-pigment is an extract of red-beet, hereinafter referred to as "red beet".

### Anthocyanin

A further preferred co-pigment is an anthocyanin.

Preferred sources of anthocyanins are extracts or juices from grapes or red sweet potato, even more preferably Hansen Sweet Potato commercially available from the Applicant.

In a preferred embodiment, the colour strength of the anthocyanin in dried grape juice measured using standard spectroscopic techniques (E1% at peak maximum between 500 - 500 nm in pH 3.0 0.1M citrate buffer with coefficient 100) is from 35 CU/kg to 40 CU/kg.

### Carmine

Carmine also referred to as cochineal, cochineal extract, crimson lake, or carmine lake - is a pigment of a bright-red color obtained from the metal complex derived from carminic acid. The carminic acid can be sourced from insects, such as *Dactylopius coccusor* or obtained through fermentation from microorganisms.

### pH of product

In one embodiment, the pH of the natural black coloring composition at a concentration of 10 w% in distilled water is from 2 to 6, preferably from 2.25 to 5.

### pH of applications

The natural black coloring composition usually has a pH of at about 4 or more, such as about 5 or more, or 6 or more.

In one embodiment, the compositions of the present inventions are stable in the pH range of soft drinks, i.e. at very low pH ranges such as from 2 to 6, preferably from 2.25 to 5, even more preferably at around 3.

### Sustainability and cost advantage

Genipin-glycine can be sustainably sourced from sustainable agriculture. Furthermore, genipin-glycine is usually less costly as for example Spirulina.

### Heat stability

Furthermore, the natural black coloring composition is heat stable, i.e. during baking or pasteurization.

### Dry powder

In one embodiment, the natural black powder coloring composition is a dry powder, for example a spray-dried powder.

### Further ingredients

The natural black powder coloring composition may further comprise further ingredients such as acidity regulators like citric acid, antioxidants like tocopherol or/and ascorbic acid, ascorbyl palmitate, carriers such as dried glucose solids and maltodextrin, antifoaming agents, vegetable oil, glycerol, emulsifiers, and gelling agents like gum arabic.

In one embodiment, the composition has no further ingredients.

The skilled person can choose the quantity of the ingredients so that they add up to 100 w% in the natural black coloring composition.

### Edible product, food, pet food, feed, or drink products

The natural black coloring composition is preferably used to provide black or grey color shades to an edible product. In a preferred embodiment, the edible product is a food, pet food, feed, or drink products.

Accordingly, a further aspect of the present invention is an edible product, in particular a food, pet food, feed, or drink product, in particular a jelly gums, hard candy, cereal, petfood, icing, and ice-creams, or dietary complements, or pharmaceutical products, comprising the natural black coloring composition of any one of the preceding claims.

In a preferred embodiment, the edible product comprises the natural black coloring composition in an amount from 0.01 w% to 5 w%, preferably 0.05 w% to 2 w%, and even more preferably from 0.1 w% to 1 w% as compared to the total weight of food, feed, or drink product.

### Dosage

In a preferred embodiment, the natural blue coloring composition is dosed at 0.05 w% to 3 w%, preferably from 0.1 w% to 2 w%, even more preferably from 0.15 to 1.5 w% as compared to the total weight of the edible product. Preferably, the edible product is a pet food, feed, food, drink, nutraceutical or pharmaceutical.

In another preferred embodiment, the natural black coloring composition is used to color a food, feed, or drink product, in particular a jelly gums, hard candy, cereal, petfood, icing, and ice-creams or dietary complements, or pharmaceutical products, preferably a food, pet food, feed or drink product. In a preferred embodiment, the food, feed, or drink product comprises the natural black coloring composition in an amount from 0.01 w% to 5 w%, preferably 0.05 w% to 2 w%, and even more preferably from 0.1 w% to 1 w% as compared to the total weight of food, pet food, feed, or drink product.

### Coloring method

Another aspect of the invention is a method for coloring an edible product, preferably a food, petfood, feed, or drink product, in particular a jelly gums, hard candy, cereal, petfood, icing, and ice-creams or dietary complements, or pharmaceutical products.

In a preferred embodiment of the method for coloring an edible product, the natural black coloring composition is applied in an amount from 0.01 w% to 5 w%, preferably 0.05 w% to 2 w%, and even more preferably from 0.1 w% to 1 w% as compared to the total weight of the edible product, in particular of the food, pet food, feed or drink product.

### Dietary complements, pharmaceutical products

The natural black coloring composition is preferably used to provide black or grey color shades to dietary complements or pharmaceutical products.

The above dosages may equally be applied to dietary complements and pharmaceutical products.

### Coloring performance

In one embodiment, the natural black coloring composition has a black color with a chroma value C in the CIELAB color system in the range 0 to 15, and preferably 0 to 10, and most preferably 0 to 5 when samples are prepared at an intermediate L* value of 40.0 to 80.0, and preferably 50.0 to 70.0, and more preferably 60.0 to 65.0 in a 2.0 inch petri dish with a LAV aperture (30mm) using the Datacolor 850 in reflectance mode (when dissolved or dispersed in water-based icing) or transmission mode (when dissolved or dispersed in water) under D65 illuminant 10 Deg.

In one embodiment, the natural black coloring composition is dissolved or dispersed in a medium at a given weight% concentration or dosage.

For transparent applications, the natural black coloring composition is dissolved or dispersed in water.

For opaque applications, the natural black coloring composition is dissolved or dispersed in water-based icing.

For transparent applications, the coloring performance is then either measured in transmission (light passing through a substance).

For opaque applications, the coloring performance is measured in reflection (light bouncing off a substance).

The coloring performance can be measured and quantified in a 3-dimensional space using La*b* coordinates with L axis (lightness, brightness of color with L=0 pure black to L=100 pure white), a* axis (negative values green to positive values red), and b* axis (negative values blue to positive values yellow).

Alternatively, the color space can be expressed as LCh with Lightness (L, as before), Chroma (color intensity or saturation, C=(a*2+b*2)1/2 ), and hue angle (h, angle in color space from the +a* axis).

Preferably, the coloring performance is measured using a Datacolor 850 and then plotted as a point in this 3-D La*b* or LCh space.

### Spectroscopic determination of pigment concentration

Pigment concentration in a natural black pigment composition can be measured in the individual components before blending. Generally standard spectroscopic techniques are used to measure pigment concentration. The component containing a single pigment is massed and dissolved in an appropriate solvent. The solution is diluted to a known mass concentration such that the measured peak absorbance is between 0.2 - 0.8 or preferably 0.4-0.5. Using a UV-VIS spectrophotometer the maximum sample absorbance is measured between 400 - 700 nm in a quartz cuvette, unless a specific wavelength is given. The pigment concentration is calculated from the mass concentration and an attenuation coefficient that relates measured absorbance with either pure pigment mass or colour unit strength of the pigment in the pigment of choice. Data is measured using a Shimadzu UV-1900i UV-VIS spectrophotometer. Generally, pigment strength is calculated as strength = ABS x D / (mass x Coeff) for measured absorbance ABS, dilution D, measured mass of component "mass", and coefficient "Coeff'.

### EXAMPLES

The following examples illustrate the natural black powder coloring compositions further without, however, limiting the scope of the invention. The following natural black coloring compositions were tested:

### Identification of natural black coloring compositions:

To identify mixtures that produce black, spray-dried huito powder (genipin-glycine) was blended with color principles as either an aqueous solution or icing sugar mixture and characterized on a Datacolor 850 under D65 illumination in transmission or reflection, respectively. Evaluation of La*b* or LCh (Luminosity, Chroma, hue) quantifies the quality of black as a function of composition and concentration. Reported mass fractions are with respect to the color principle: e.g. huito blue polymer, carotenoid oleoresin, betanin where possible. Elsewhere the mass of the dried filtered fruit juice was used. Note that the specific ratios reported here are examples using fresh materials of a particular source If the color of a principal component is shifted there will be a corresponding shift in the blend composition to produce a black. Two examples of carotenoids are given: encapsulated paprika and emulsified paprika. There are overlapping but not identical compositions to produce a black. Huito color usually can be shifted depending on the raw materials used in its manufacture.

### Aqueous trials:

Colorants were massed (typically 0.5-2.0 g) and quantitatively added to a 100 mL flask. Either pH3 sodium citrate/HCl buffer, pH6 phosphate buffer, or deionized water was added to the 100 mL mark with thorough inversion and mixing to fully disperse or dissolve the color principles. The liquid was transferred to a 1cm quartz cuvette and measured in transmission on the Datacolor 850 under D65 illumination. Where a dilution series was performed a 2x dilution was performed on the remaining colored liquid and the color measured again. This was repeated as necessary. Aqueous testing suggests likely appearance in transparent applications.

### Icing sugar trials:

Colorants were massed into a beaker (typically 0.5-2.0 g). 20 g of pH3 sodium citrate/HCl buffer, pH6 phosphate buffer, or deionized water was added and mixed to completely dissolve or disperse the powders. 100 g of sifted 6x icing sugar was added, and hand mixed for 5 minutes. A quartz cuvette was filled with icing sugar and the color measured under reflectance with D65 illumination. Where a dilution series was desired the remaining colored icing sugar was diluted 2x with uncolored icing prepared as 20g water + 100g icing sugar, and the color measured. Icing sugar appearance suggests appearance in opaque applications.

### Optimization:

Repeated evaluation of measured color as a function of pigment concentration and composition allowed optimization of color for an application. For a black food coloring composition the measured a* and b*, or equivalently the C (Chroma) will be approximately 0 and constant across a wide concentration range. For initial testing the color principles were massed separately and mixed during sample preparation. Similar results were observed for mixing the components in advance and preparing the colored samples from the pre-blended components. The pigments and co-pigments can be blended in advance by hand mixing, or preferably either preparing the dried powders from liquid mixtures of the components or dry blending powders together in a mill or powder blender.

Colorimetric readings become inaccurate at very high pigment load (i.e. low luminosity or within the dark black region) initial optimization is performed at intermediate color dosages that achieves a mid-gray with luminosity 30-80 or preferably 40-60.

Samples prepared with this dosage usually have near the maximum chroma or color vibrancy across the concentration range and therefore identifies the most colorful the pigment blend is likely to appear. To study a binary mixture a series of icing sugar or aqueous samples were prepared at constant dosage with varying wt% huito.

The most common issues regard stability in application, which limits the blend applicability, and turbidity. If one component of a blend is turbid the perceived color of reflected and transmitted light will be different. This limits usage of the color blend to opaque applications. Most carotenoid pigments (e.g. curcumin, beta carotene, carrot juice extract, paprika oleoresin) are turbid and therefore their blends are often limited to opaque applications.

### Example 1: Huito and encapsulated paprika

Huito powder blended with encapsulated paprika oleoresin in icing sugar. The coloring performance measured with the Datacolor 850 was as follows:

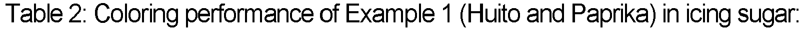

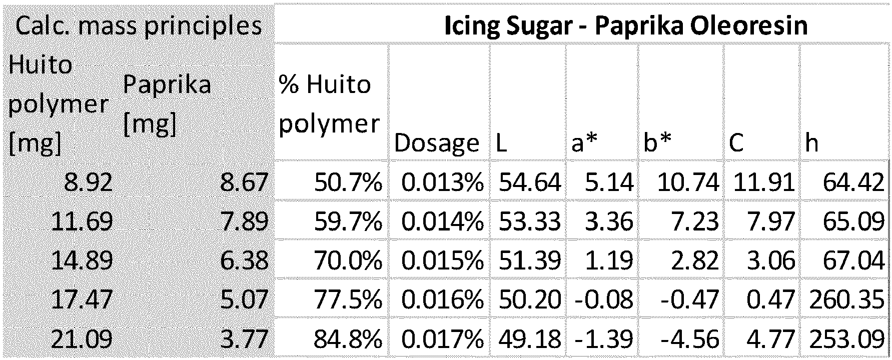

At moderate dosages huito polymer plus paprika oleoresin blends produce a satisfactory grey at 70-85% huito polymer and 15%-30% paprika oleoresin, or preferably 75-80% huito polymer and 20%-25% paprika oleoresin. Images of icing sugar preparations with ca. 70% huito polymer and 30% paprika oleoresin in icing sugar at ca. 0.007%, 0.012%, and 0.017% are presented below.

Increased dosage is expected to produce darker colors approaching black. Note that in transparent applications this blend has a notable pink or red hue cast. Mixing encapsulated paprika oleoresin with huito produces a satisfactory grey or black color in opaque applications.

### Example 2: Huito and emulsified paprika

Huito powder is blended with emulsified paprika liquid. First a range of compositions were prepared to identify the optimal huito and paprika ratio for a low chroma black. The results are shown in Figures 6 to 9.

Figure 6: Binary natural black coloring compositions comprising huito polymer, preferably genipin-glycine, and emulsified paprika as co-pigment in deionized water.

Figure 7: Binary natural black coloring compositions comprising huito polymer, preferably genipin-glycine, and emulsified paprika as co-pigment in deionized water.

Figure 8: Binary natural black coloring compositions. A dilution series was produced with 81% and 86% huito polymer, both present in the identified low chroma region above. We found generally 80 w% to 90 w% huito (10 w% to 20 w% paprika oleoresin) and preferably 84 w% to 86% huito polymer (14 w% to 16 w% paprika oleoresin) is best for preparing a black food coloring pigment from a blend of huito and emulsified paprika, wherein the w% refer to the total weight of the natural black coloring composition. In each case greater than 0.1 w% dosage (i.e. 100 mg/100 mL) or preferably greater than 0.2 w% produces a dark black appearance. Compositions outside these regions will have a notable blueish or reddish hue and not appear qualitatively as black. Lower concentrations produce a low chroma, but pale black (i.e. gray). This demonstrates that identifying a low chroma region at intermediate dosage allows prediction of optimal composition at high dosage for a dark black shade.

Figure 9: Binary natural black coloring composition of genipin-glycine and paprika oleoresin as co-pigment.

## Claims

1. A natural black coloring composition comprising:
▪ A pigment derived from *Genipa americana,* preferably genipin-glycine; and
▪ One or more co-pigments;
wherein the natural black coloring composition is a binary composition comprising an extract derived from *Genipa americana,* preferably genipin-glycine and a co-pigment, preferably beta-carotene, annatto, or paprika; or
wherein the natural black coloring composition is a ternary composition comprising an extract derived from *Genipa americana,* preferably genipin-glycine and two co-pigments,
▪ A first co-pigment, wherein the first co-pigment is a carotenoid, preferably beta-carotene, an annatto extract, or a turmeric extract and preferably is a turmeric extract; and
▪ A second co-pigment, wherein the second co-pigment is a red beet extract, an anthocyanin source, preferably an extract from grape, violet carrot, and red sweet potato, or carmine.

2. The natural black coloring composition according to claim 1, wherein the natural black coloring composition is a binary natural black coloring composition and wherein the natural black coloring composition comprises no further co-pigment.

3. The natural black coloring composition according to claim 1, wherein the natural black composition is a binary composition comprising
▪ From 80 w% to 90 w%, preferably 84 w% to 86 w% of a pigment derived from *Genipa americana,* preferably genipin-glycine; and
▪ From 10 w% to 20 w%, preferably 14 w% to 16 w% of paprika oleoresin as co-pigment, preferably emulsified paprika oleoresin,
wherein the w% are as compared to the total weight of the pigments in the of the natural black coloring composition.

4. The natural black coloring composition according to claim 1, wherein the natural black composition is a binary composition comprising
▪ From 97.5 w% to 98.7 w%, preferably from 97.8 w% to 98.4 w% of a pigment derived from *Genipa americana,* preferably genipin-glycine; and
▪ From 1.3 w% to 2.5 w%, preferably 1.6 w% to 2.2 w% of beta-carotene as co-pigment, preferably spray-dried beta-carotene, orange carrot juice or beta-carotene extract;
wherein the w% are as compared to the total weight of the pigments in the natural black coloring composition.

5. The natural black coloring composition according to claim 1, wherein the natural black coloring composition is a binary composition comprising 94 w% to 99 w%, preferably 96 w% to 98 w%, or most preferably 96.5 w% to 97.5 w% of genipin-glycine as compared to the total weight of the pigments in the in the natural black coloring composition, preferably wherein the natural black coloring composition is used in opaque applications.

6. The natural black coloring composition according to claim 1, wherein the natural black coloring composition is a binary composition comprising 98 w% to 99.7 w%, or preferably 98.7 w% to 99.5 w% of genipin-glycine with respect to carotenoids in the natural black coloring composition.

7. The natural black coloring composition according to claim 1, wherein the natural black composition is a binary composition comprising
▪ From 45 w% to 70 w%, preferably from 55 w% to 65 w% of a pigment derived from Genipa americana, preferably genipin-glycine; and
▪ From 30 w% to 55 w%, preferably from 35 w% to 45 w% norbixin as co-pigment;
wherein the w% are as compared to the total weight of the pigments in the natural black coloring composition.

8. The natural black coloring composition according to claim 1, wherein the natural black coloring composition is a ternary natural black coloring composition, and wherein the natural black coloring composition comprises no further co-pigment.

9. The natural black coloring composition according to claim 1, wherein the natural black composition is a ternary composition comprising from 89.9 w% to 96.7 w%, preferably from 91.1 w% to 95.5 w% of a pigment derived from *Genipa americana,* preferably genipin-glycine; and
▪ A first co-pigment, wherein the first co-pigment is from 3.0 w% to 9.0 w%, preferably 4.0 w% to 8.0 w% curcumin; and
▪ A second co-pigment, wherein the second co-pigment is from 0.3 w% to 1.2 w%, preferably from 0.5 w% to 0.9 wt% betanin.
wherein the w% are as compared to the total weight of the pigments in the natural black coloring composition.

10. The natural black coloring composition according to claim 1, wherein the natural black composition is a ternary composition comprising from 18 w% to 58 w%, preferably from 18.4 w% to 38.4 w% of a pigment derived from *Genipa americana,* preferably genipin-glycine; and
▪ A first co-pigment, wherein the first co-pigment is from 0.4 w% to 5.2 w%, preferably 0.8 w% to 3.2 w% curcumin; and
▪ A second co-pigment, wherein the second co-pigment is from 40 w% to 80 w%, preferably from 60 w% to 70 w% dried grape juice.
wherein the w% are as compared to the total weight of the pigments in the natural black coloring composition.

11. The natural black coloring composition according to any one of the preceding claims, wherein the natural black coloring composition is in the form of a dry powder or of a liquid, and preferably is in the form of a dry powder.

12. Use of the natural blue coloring composition according to any one of the preceding claims for coloring an edible product, wherein the natural blue coloring composition is dosed at 0.05 w% to 3 w%, preferably from 0.1 w% to 2 w%, even more preferably from 0.15 to 1.5 w% as compared to the total weight of the pigments in the edible product, and wherein the edible product preferably is a pet food, feed, food, drink, nutraceutical or pharmaceutical.

13. The use of the natural black coloring composition according to any one of the preceding claims to color a food, feed or drink product, in particular a jelly gums, hard candy, cereal, petfood, icing, and ice-creams or dietary complements, or pharmaceutical products, wherein the food, feed or drink product, wherein the food, feed or drink product comprises the natural black coloring composition in an amount from 0.01 w% to 5 w%, preferably 0.05 w% to 2 w%, and even more preferably from 0.1 w% to 1 w% as compared to the total weight of food, pet food, feed or drink product.

14. A method for coloring a food, feed or drink product, in particular jelly gums, hard candy, cereal, petfood, icing, and ice-creams, or dietary complements, or pharmaceutical products, comprising mixing the natural black coloring composition of any one of the preceding claims with the food, feed or drink product, in particular jelly gums, hard candy, cereal, petfood, icing, and ice-creams, wherein the food, feed or drink product comprises the natural black coloring composition in an amount from 0.01 w% to 5 w%, preferably 0.05 w% to 2 w%, and even more preferably from 0.1 w% to 1 w% as compared to the total weight of food, pet food, feed or drink product.

15. A food, pet food, feed or drink product, in particular a jelly gums, hard candy, cereal, petfood, icing, and ice-creams, or dietary complements, or pharmaceutical products, comprising the natural black coloring composition of any one of the preceding claims, preferably in an amount from 0.01 w% to 5 w%, preferably 0.05 w% to 2 w%, and even more preferably from 0.1 w% to 1 w% as compared to the total weight of food, feed or drink product.
